# EUROPÄISCHE PATENTSCHRIFT

(11) **EP 0 695 211 B1**
(45) Veröffentlichungstag und Bekanntmachung des Hinweises auf die Patenterteilung: **23.04.1997**
(21) Anmeldenummer: 94908354.7
(22) Anmeldetag: 19.02.1994
(51) Int. Cl.: B01D 27/00, B01D 27/06, B01D 29/11, B01D 29/21, B01D 29/23

(54) **FILTERELEMENT MIT STRECKMETALLMANTEL**
FILTER ELEMENT WITH EXPANDED METAL JACKET
ELEMENT FILTRANT MUNI D'UNE ENVELOPPE EN METAL DEPLOYE

(30) Priorität: 20.04.1993 DE 4312705
(43) Veröffentlichungstag der Anmeldung: 07.02.1996
(73) Patentinhaber: HYDAC FILTERTECHNIK GMBH, D-66280 Sulzbach (DE)
(72) Erfinder: LAUER, Viktor, D-66809 Bilsdorf (DE); SCHWENDER, Matthias, D-66459 Kirkel (DE)
(74) Vertreter: Bartels, Hans
(86) Internationale Anmeldenummer: EP9400485
(87) Internationale Veröffentlichungsnummer: WO9423818

(56) Entgegenhaltungen:
- FR-A- 857 866
- GB-A- 2 101 902
- US-A- 3 752 321

## Beschreibung

Die Erfindung betrifft ein rohrförmiges Filterelement zur Filtration von Fluiden mit einer zick-zack-förmig gefalteten Filtermatte, deren beide einander zugewandten und abgebogenen Enden durch ein Klebstoffbett verbunden und in ihrer Lage fixiert sind, wobei die Filtermatte zumindest auf der äußeren Seite von einem zylindrischen Streckmetallgitter umgeben ist.

Derartige Filterelemente dienen zur Filtration von Flüssigkeiten bzw. Lösungen jedweder Art, beispielsweise in Form von echten Suspensionen, Dispersionen, Emulsionen oder kolloiden Lösungen, und haben sich wegen ihrer kompakten Bauweise und ihrer großen Filterfläche allgemein bewährt. Um sicherzustellen, daß der Fluidstrom nur durch das eigentliche Filtermedium hindurchführt, bildet neben der Abdichtung am dem Endkappen die Verbindungsfalte der beiden einander zugewandten Enden der Filtermatte in Form von Endstegen eine der kritischen Stellen, die leckdicht zu schließen sind.

Die bekannten Filterelemente weisen eine unter Umständen aus verschiedenen Filtermaterialien zusammengesetzte zick-zack-förmig gefaltete oder plissierte Filtermatte auf, die um ein massives, im Inneren des Filterelementes angeordnetes, mit Durchlässen versehenes Stützrohr herumgelegt ist und die als Schutz vor Beschädigungen von außen in ein feinmaschiges Drahtgewebe eingefaßt ist, das dem Faltenverlauf der Filtermatte folgt. Die schützende Verbindung der Filtermatte mit dem angesprochenen Drahtgewebe ist aufwendig und damit teuer und darüber hinaus ist die Filtermatte vor Beschädigungen nicht vollständig geschützt. Auch kann das teilweise nach außen vorstehende Drahtgewebe bei der Handhabung durch eine Bedienperson, beispielsweise beim Filterwechsel, zu Verletzungen führen.

Das bekannte Drahtgewebe kann nur geringe Kräfte aufnehmen, so daß es zu einem Aufblähen und Unbrauchbarwerden des Filterelementes kommen kann, sobald sich die Anströmrichtung, beispielsweise bei einem Rückströmvorgang, von innen nach außen umkehrt. Da das Drahtgewebe unmittelbar in Kontakt ist mit der äußeren Schicht der Filtermatte, ist hierfür ein resistentes Filtermaterial zu wählen, um zu vermeiden, daß es zu Beschädigungen der Filtermatte kommt, wobei jedoch dieses resistente Material nicht über derart gute Durchlauf- und Filtriereigenschaften verfügt, wie beispielsweise empfindliche Filtermaterialien aus Polyester-, Glasfaser- oder Papiervlies. Da darüber hinaus das Drahtgewebe große Maschenabstände aufweist, können Metallspäne und sonstige Verschmutzungen das empfindliche Filtermaterial heschädigen und die Filtrierleistung wesentlich beeinträchtigen.

Die italienische Firma ITALFIM S.P.A. mit Sitz in Bergamo hat zwar bei einem gattungsgemäßen Filterelement bereits vorgeschlagen, die zick-zack-förmig gefaltete Filtermatte auf der nach außen gekehrten Seite mit einem zylindrischen Streckmetallgitter zu umgeben, so daß diese sich aus empfindlicheren aber wirksameren Filtermaterialien zusammensetzen kann; allein aufgrund des weitmaschigen Streckmetallgitters bei der bekannten Lösung kommt es auch hier zu dem Problem einer geringen Druckstabilität und die Filtermatte ist vor Beschädigungen nicht geschützt. Aufgrund des weitmaschigen Gitters kann es auch hier zu der Verletzung einer Bedienperson kommen, insbesondere wenn Metallspäne od.dgl. sich in dem Maschengewebe festgesetzt haben.

Bei dieser bekannten Lösung sind die stumpf aneinanderstoßenden Enden des zylindrischen Streckmetallgitters miteinander punktverheftet oder verschweißt, was in der Herstellung aufwendig sowie teuer ist und darüber hinaus den dahinterliegenden Bereich der empfindlichen Filtermatte durch Wärmeeinleitung oder Funkenbildung schädigen kann. Ferner benötigt diese Art der herzustellenden Verbindung einen relativ großen Flächenbereich auf der Außenumfangsseite des Streckmetallgitters mit der Folge, daß diese als Filtrationsfläche nicht zur Verfügung steht.

Durch die Europäischen Schriften 0 139 822 A2, 0 440 352 A2, 0 001 407 B1 und 0 062 867 B1 sowie durch die DE 31 28 546 C2 sind gattungsfremde Filterelemente bekannt, bei denen sog. Längsnahtclips die beiden einander zugewandten Enden der Filtermatte entweder umfassen oder sogar in diese eingreifen, um anschließend mit diesem Längsnahtclip thermisch verschweißt zu werden. Hierdurch ergeben sich zwar hochfeste und leckfreie Verbindungen der freien Enden der Filtermatte; jedoch sind die dahingehenden Verfahren aufwendig und teuer. Im übrigen ist auch hier die Materialauswahl beim Zusammenstellen der Filtermatte eingeschränkt, da nur Materialien, wie Kunststoffmaterialien, zum Einsatz kommen können, die sich thermisch gut verarbeiten lassen.

Bei dem gattungsfremden Filterelement gemäß der DE-B-2.417.551 werden zur Verbindung der Enden des Filterbogenmaterials in Form der Filtermatte flüssige zwei Komponenten aufweisende Klebstoffe bzw. Gießharz verwendet, die bei Raumtemperatur verarbeitbar sind, so daß die Anwendung von schädigender Wärme überflüssig wird. Durch die gattungsfremde GB-A-750.396 ist es bekannt, die Enden des Filterbogenmaterials in Form der Filtermatte über einen metallenen wannenförmigen Längsnahtclip miteinander zu verbinden. Bei einem weiteren gattungsfremden Filterelement nach der US-A-4.512.892 ist es sogar möglich, nach Herstellen des Klebstoffbettes mittels des wannenförmigen Längsnahtclips diesen zu entfernen, wobei als weitere Seitenbegrenzung für das Klebstoffbett zwei dem endseitigen Verlauf der Filtermatte nachfolgende undurchlässige Montagehilfen vorgesehen sind, die bügelartig im jeweils endseitigen Bereich der Filtermatte diese übergreifend dafür Sorge tragen, daß das Klebstoffmittel nicht in den filternden Bereich der Filtermatte durch Kapillarwirkung weiter vordringt und dort die Filtrierleistung beeinträchtigt.

Bei den vorgenannten gattungsfremden Filterelementen, die zumindest teilweise mit einem wannenförmigen Längsnahtclip versehen sind, ist die jeweilige Filtermatte vor äußeren Beschädigungen, beispielsweise beim Transport und Einbau, überhaupt nicht geschützt und im betrieblichen Einsatz nicht ausreichend druckstabil. Auch hier ist bei einem Wechsel des Filterelementes die Bedienperson vor Verletzungen nicht sicher, sofern scharfkantige Kleinteile, wie Metallspäne, sich in der Filtermatte festgesetzt haben. Da nur allein mit der Filtermatte gefiltert wird, kann diese sich mit dahingehenden Kleinteilen auch rasch zusetzen, was die Filtrierleistung und die Einsatzdauer der bekannten Filterelemente erheblich herabsetzt.

Ausgehend von diesem Stand der Technik liegt der Erfindung die Aufgabe zugrunde, ein rohrförmiges Filterelement zu schaffen, das im Betrieb druckstabil ist und hohe Filtrationsleistungen sowie eine lange Einsatzdauer zuläßt. Ferner soll bei einem Wechsel des Filterelementes durch eine Bedienperson die Verletzungsgefahr mit Sicherheit ausgeschlossen sein.

Eine dahingehende Aufgabe wird mit den Merkmalen des Anspruchs 1 gelöst.

Dadurch, daß gemäß dem kennzeichnenden Teil des Anspruches 1 das Streckmetallgitter einen Streckmetallmantel bildet, der mit geringer Maschenweite oder engporig jeweils in einer Durchlaßgröße zwischen 0,5 mm bis 2,5 mm die Filtermatte schützend umgibt und daß in dem Klebstoffbett die einander zugewandten und abgekanteten Enden des Streckmetallmantels eingebettet sind, die die Enden der Filtermatte zwischen sich aufnehmen und/oder parallel zu diesen verlaufend angeordnet sind, weist das Filterelement aufgrund seiner geringen Maschenweite oder Engporigkeit eine im wesentlichen glatte homogene Oberfläche auf, so daß ein guter Griff- und Transportschutz erreicht und insbesondere die Verletzungsgefahr bei der Bedienperson vermieden ist, da Metallspäne sich an der glatten homogenen Oberfläche nicht ohne weiteres festsetzen können.

Der Streckmetallmantel und seine endseitige Festlegung über seine abgekanteten Enden ist derart steif ausgebildet, daß insbesondere bei Rückspülvorgängen, also bei rückwärtiger Ansteuerung der Filtermatte, das Filterelement sich nicht aufblähen kann. Metallspäne oder sonstige Verschmutzungen sind mit dem Streckmetallmantel sicher von der Filtermatte abgehalten, so daß Beschädigungen des wirksamen Filtermaterials nicht zu befürchten sind. Da der Streckmetallmantel auf seiner Innenseite, die der Filtermatte zugewandt ist, ebenfalls eine glatte Oberfläche ausbildet und die Filtermatte sich an den Stellen des Faltens flächig und mithin schonend an das Streckmetall anlegt, können auch empfindliche, aber von der Filtrierleistung hochwirksame Filtermaterialien für die Filtermatte zum Einsatz kommen.

Auch wird über die Maschen bzw. Poren des Streckmetallmantels eine Art Vorfiltration verwirklicht, die das Filtrierergebnis des Filterelementes insgesamt verbessert. So erhöht sich bei dem erfindungsgemäßen Filterelement aufgrund des Streckmetallmantels die Durchflußwechselermüdungsfestigkeit und somit insgesamt die β-Wert-Stabilität.

Durch die platzsparende Verbindung der Enden von Strecknetallmantel und Filterelement mittels des Klebstoffbettes in einem engen Bereich, bei dem die Enden der Filtermatte zwischen den Enden des Streckmetallmantels und/oder parallel zu diesen verlaufend angeordnet sind, ist eine Verbindung ohne schädigenden Wärmeeinfluß möglich, so daß die gewünschte leckdichte Verbindung mit einfachen Herstellverfahren kostengünstig durchführbar ist. Die derart hergestellte Klebverbindung ist im übrigen äußerst haltbar und ein Ausreißen der Enden der Filtermatte ist mit Sicherheit durch die angesprochene Anordnung vermieden. Ferner ist aufgrund der platzsparenden Verbindung nur wenig für die Filtration benötigtes Material verbraucht, was die Filtrierleistung des Filterelementes erhöht.

Da der Streckmetallmantel bis auf die vorhandenen äußerst kleinen Durchlässe eine im wesentlichen geschlossene Fläche darstellt, ist er auch mit einer Beschriftung versehbar, was insgesamt der Formschönheit des Filterelementes zugute kommt.

Bei einer bevorzugten Ausführungsform des erfindungsgemäßen Filterelementes ist der Streckmetallmantel aus nichtrostendem Stahl oder aus verzinktem Stahl gebildet, wobei der Streckmetallmantel rautenförmige Durchlässe aufweist, deren freie Diagonalen D eine Größe zwischen 0,5 bis 1,75 mm aufweisen, die die Maschenweite oder die Porengröße mit bestimmen. Hierdurch ist jede Form der Korrosion vermieden und es hat sich gezeigt, daß mit den rautenförmigen Durchlässen im angegebenen Größenbereich sich sehr gute Filtrierleistungen bei guten Durchsatzwerten erzielen lassen.

Ein besonders gutes Filtrierergebnis ist ferner erreichbar, wenn vorzugsweise die Filtermatte mehrschichtig aufgebaut ist und als Schichten mindestens ein Polyestervlies und/oder eine Glasfasermatte und/oder ein Papiervlies und/oder ein Edelstahl-Polyester-Mischgewebe oder Metalldrahtgewebe oder Kunststoffgewebe verwendet sind.

Bei einer weiteren bevorzugten Ausführungsform des erfindungsgemäßen Filterelementes laufen die abgekanteten Enden des Streckmetallmantels in einem spitzen Winkel aufeinander zu, wobei eine weitere Begrenzung des Klebstoffbettes durch die in einem spitzen Winkel aufeinander zulaufenden Enden der Filtermatte gegeben ist. Aufgrund dieser Anordnung füllt der Klebstoff gestützt und geführt durch die abgekanteten Enden des Streckmetallmantels das zwischen den Enden und der ersten Faltung der Filtermatte bestehende Bett aus, so daß ein leckdichter Abschluß des Inneren des Filterelementes gegenüber der Umgebung erreicht ist.

Bei einer besonders bevorzugten Ausführungsform des erfindungsgemäßen Filterelementes ist als weitere Begrenzung des Klebstoffbettes eine wannenartige Klammer vorgesehen, in die die Enden von Filtermatte und Streckmetallmantel eingreifen. Diese Klammer bildet eine Art Längsnahtclip aus, der eine Vorfixation von Streckmetallmantel und Filtermatte erlaubt, wobei die dann V-förmig angeordneten Streckmetallmantelenden und Filtermattenenden eine Art Eingußkanal für den Klebstoff bilden, so daß sich insgesamt ein homogen ausgebildetes Klebstoffbett bildet. In Abhängigkeit von der Öffnungsrichtung der Wanne kann hierbei auch vom Inneren des Filterelementes aus der Klebstoff zugeführt werden.

Bei einer weiteren besonders bevorzugten Ausführungsform des erfindungsgemäßen Filterelementes bildet die mittels des Klebstoffbettes hergestellte Verbindung eine Art Längsnaht aus, die zur Umgebung hin von einem Steg abgedeckt ist, der mit einer Stegfläche in die Längsnaht eingreift. Hierdurch ergibt sich zum einen ein Schutz der Klebstoffnaht vor Beschädigungen und zum anderen neben dem Äußeren des Streckmetallmantels eine weitere Beschriftungsmöglichkeit zum Kennzeichnen des Filterelementes. Der in die Klebstoffnaht eingreifende Steg verbessert darüber hinaus den Halt des Klebstoffes in seinem Bett. Vorzugsweise ist der Klebstoff des Filterelementes aus einem Gießharz gebildet.

Sofern vorzugsweise ein zweiter Streckmetallmantel auf der Innenseite des Filterelementes angeordnet ist, der die Filtermatte nach innen abstützt, ist gegenüber dem im Stand der Technik bekannten Stützrohr eine verbesserte Filtrierleistung erreichbar, wobei sich gleichzeitig eine leichtere Bauform des Filterelementes ergibt.

Im folgenden ist das erfindungsgemäße rohrförmige Filterelement anhand der Zeichnung näher erläutert.

Es zeigen:

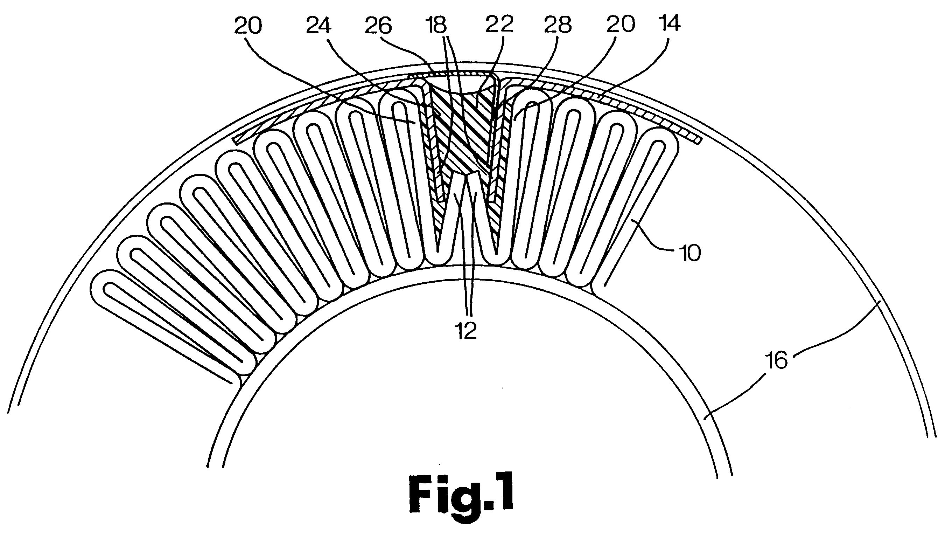

- Fig.1 bis 3: in vereinfachter und prinzipieller Darstellung eine Draufsicht auf das jeweilige Filterelement an der Stelle der leckdichten Verbindung, wobei andeutungsweise endseitig noch eine Abschlußkappe dargestellt ist.

Das rohrförmige Filterelement gemäß der Fig.1 dient zur Filtration von Fluiden und weist eine gefaltete Filtermatte 10 auf. Die Filtermatte 10 ist mehrschichtig aufgebaut (nicht dargestellt) und weist von außen zum Inneren des Filterelementes folgende Schichten auf:
1. Polyestervlies
2. Glasfasermatte
3. Glasfasermatte
4. Papiervlies oder Polyestervlies
5. Edelstahl-Polyester-Mischgewebe oder Metalldrahtgewebe oder Kunststoffgewebe.

Die beiden einander zugewandten Enden 12 der Filtermatte 10 laufen in einem spitzen Winkel aufeinander zu und berühren sich in einer gemeinsamen Längskante. Die Länge der Enden 12 beträgt etwas weniger als die Hälfte einer gefalteten Bahn der Filtermatte 10. Nach außen hin ist die Filtermatte 10 von einem zylindrischen Streckmetallmantel 14 umgeben. Der gereckte und mit rautenförmigen Perforierungen versehene Metallmantel 14 bildet ein Metallgitter aus, dessen

| | |
|---|---|
| Maschenlänge | l: 1,0 mm bis 2 mm, |
| Maschenbreite | b: 1,0 mm bis 2 mm, |
| Maschenöffnung Länge der freien Diagonalen | D: 0,5 mm bis 1,75 mm, |
| Stegbreite | c: 0,25 mm bis 0,5 mm, |
| Stegdicke | s: 0,10 mm bis 0,30 mm und |
| Streckgitterdicke | a: 0,25 mm bis 0,50 mm ist. |

Der Streckmetallmantel 14 besteht entweder aus nicht rostendem Stahl, beispielsweise aus 1.4301 oder 1.4306 nach DIN 17440, oder aus verzinntem Stahl. Die angesprochenen Begriffe und Kurzzeichen sind Gegenstand der DIN 791.
Die beiden Abschluß- oder Endkappen 16, die das jeweilige Filterelement endseitig begrenzen, sind ebenfalls aus dahingehendem, nicht rostendem Stahlblech, aus verzinntem Stahlblech oder aus Kunststoff. Die beiden Endkappen 16 werden über eine Vergußmasse (nicht dargestellt) leckdicht mit der Filtermatte 10 und dem Streckmetallmantel 14 verbunden. Bei den hochgestellten Flankenquerschnitten der Enden 12 wird eine Versiegelung derselben durch den Klebstoff, gegebenenfalls in Verbindung mit einem Längsnahtclip, hergestellt, so daß eine Faserauswaschung und Faserwanderung (fiber migration) auf der Reinseite vermieden sind.

Auf der Innenseite des Filterelementes kann ein Stützrohr (nicht dargestellt) oder ein innerer Streckmetallmantel (nicht dargestellt) oder eine Kombination dieser beiden Bauteile (nicht dargestellt) vorgesehen sein. Sofern ein innerer Streckmetallmantel verwendet wird, weist dieser vorzugsweise die folgenden Kenndaten auf:

| | |
|---|---|
| Maschenlänge | l: 0,75 mm bis 2,5 mm, |
| Maschenbreite | b: 0,75 mm bis 2,5 mm, |
| Maschenöffnung Länge der freien Diagonalen | D: 0,4 mm bis 1,5 mm, |
| Stegbreite | c: 0,10 mm bis 0,40 mm, |
| Stegdicke | s: 0,10 mm bis 0,25 mm und |
| Streckgitterdicke | a: 0,2 mm bis 0,40 mm. |

Vorzugsweise ist hierbei als Werkstoff ebenfalls ein nicht rostender Stahl oder verzinnter Stahl verwendet. Die Filtermatte 10 legt sich hierbei mit ihren Falten auf der Außen- und Innenseite des inneren bzw. des äußeren Streckmetallmantels 14 an.

Die beiden einander zugewandten Enden 18 des Streckmetallmantels 14 sind abgebogen und laufen spitz aufeinander zu. Der Abstand zwischen den Enden 18 ist derart gewählt, daß die Enden 12 der Filtermatte 10 in den hierdurch gebildeten Raum eingreifen können. Ferner weisen die abgebogenen Enden 18 jeweils einen vorgebbaren axialen Abstand zu der zuletzt vollständig gefalteten Bahn 20 der Filtermatte 10 auf, die parallel zu dem einen Längssteg ausbildenden und ihr zugeordneten Ende 18 verläuft. Die Länge der Enden 18 ist derart gewählt, daß sie etwas länger sind als die Hälfte der gefalteten Bahn 20.

Die Enden 18 des Streckmetallmantels 14 bilden eine Art Einfüllkonus für den Klebstoff 22 in Form von Gießharz aus. Für den Klebstoff 22 ist eine Längsseitenbegrenzung in Form eines Bettes 24 vorgesehen, wobei ein Teil des Bettes durch die einander zugewandten und abgebogenen Enden 18 des Streckmetallmantels 14 gebildet ist. Die vorgesehene Gießharzmenge verteilt sich dann derart zwischen den beiden Enden 18, daß noch vor dem Erhärten ein Teil in Anlage mit den beiden einander zugewandten Bahnen 20 der Filtermatte 10 sowie mit den spitzenförmigen Falten zwischen den beiden Enden 12 und den zugeordneten Bahnen 20 der Filtermatte 10 kommt. Nach außen hin bildet die Längsnaht in Form des erhärteten Klebstoffes 22 eine konvexe Wölbung aus. Diese Wölbung ergibt sich durch eine Kapillarwirkung an den Seitenflanken der abgebogenen Enden 18 des Streckmetallmantels.

Die mittels des Klebstoffes 22 hergestellte Verbindung, die die Längsnaht ausbildet, ist zur Umgebung hin von einem Steg 26 abgedeckt, der mit einer Stegfläche 28 in diese Längsnaht eingreift. Der winkelartige Steg 26 legt sich mit seiner Stegfläche 28 an ein abgebogenes Ende 18 des Streckmetallmantels 14 an und deckt mit seiner anderen freien Stegfläche die Klebstoffbahn gegenüber der Umgebung ab.

Die folgenden Ausführungsbeispiele werden nur noch insofern erläutert, als sie sich wesentlich von dem vorangegangenen Ausführungsbeispiel nach der Fig.1 unterscheiden. Dabei werden gleichgeartete Teile mit denselben, aber um jeweils 100 erhöhten Bezugsziffern wiedergegeben und die bisherigen Ausführungen gelten entsprechend auch für die geänderten Ausführungsformen.

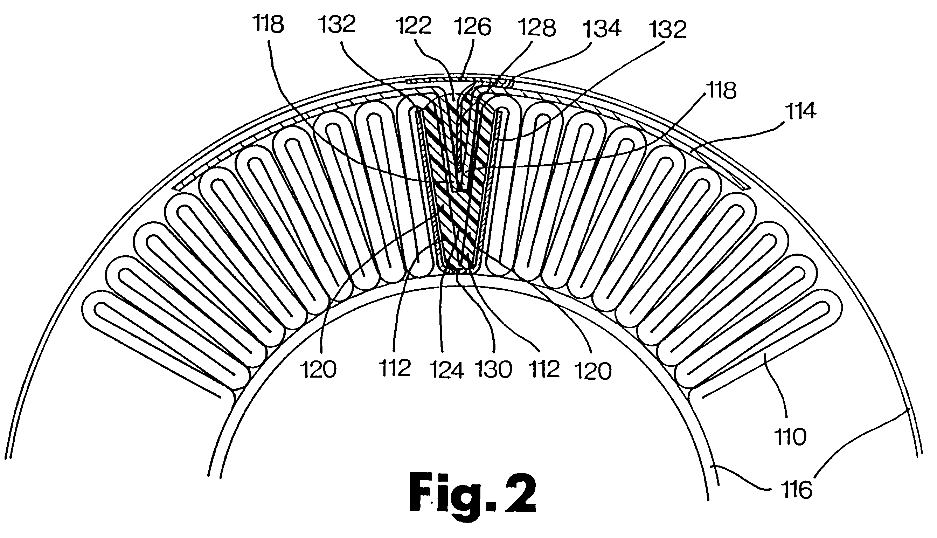

So weist die Ausführungsform gemäß der Fig.2 als weiteren Teil des Bettes 124 in der Art eines Längsnahtclips eine wannenartige Klammer 130 auf, in deren freie Öffnung die beiden Bahnen 120 mit ihren beiden Enden 112 eingreifen. Ebenso greifen die beiden Enden 118 des Streckmetallmantels 114 in die Klammer 130 ein. Die beiden Bahnen 120 liegen hierbei zwischen den beiden Wandflächen 132 und den ihnen benachbart angeordneten Enden 118. Sowohl die Wandflächen 132 als auch die Enden 112 und 118 der Filtermatte 110 bzw. des Streckmetallmantels 114 laufen in einem spitzen Winkel aufeinander zu, wobei der freie Öffnungsquerschnitt der Wanne 130 der Umgebung zugewandt ist. Zwischen den beiden, in einem spitzen Winkel längs einer Kante aufeinanderstoßenden Enden 118 ist der Steg 126 angeordnet, wobei die in das Bett 124 eingreifende Stegfläche 128 mittig angeordnet ist und eine Falzstelle 134 aufweist, die in Anlage ist mit einem Teil des Außenumfanges des Streckmetallmantels 114. Der die Längsnaht ausbildende Klebstoff 122 durchgreift hierbei die beiden Endbahnen 120 der Filtermatte 110.

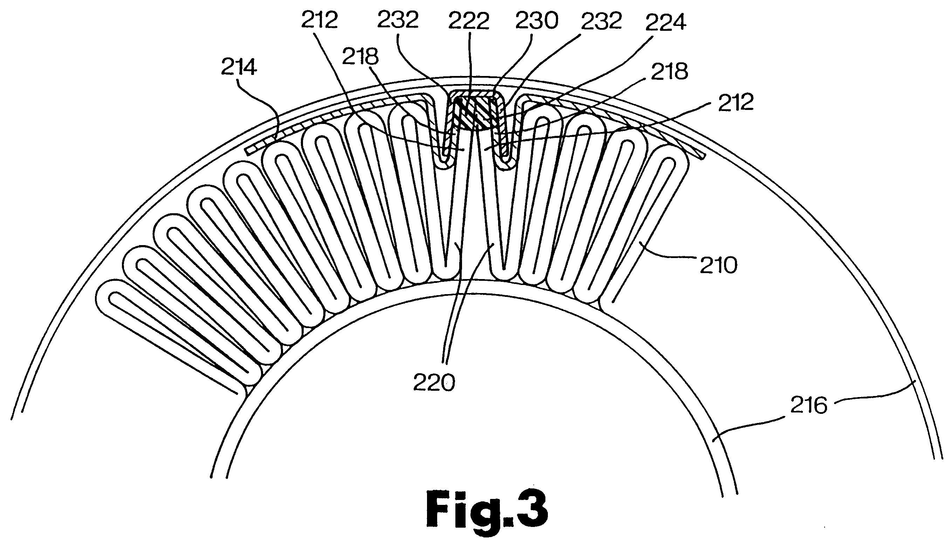

Bei der Ausführungsform gemäß der Fig.3 wird der wannenartige Längsnahtclip 230 von außen aufgesetzt, so daß sein freier Öffnungsquerschnitt dem Inneren des Filterelementes zugewandt ist. Die abgebogenen Enden 212 der Filtermatte 210 sind bei dieser Ausführungsform nochmals umgelenkt und greifen zwischen den Wandflächen 232 und den spitz zulaufenden Bahnen 220 in die Wanne 230 ein. Das derart gebildete Bett 224 wird wiederum mit dem Klebstoff 222 befüllt, wobei die Klebstoffbahn diesmal von der Bodenfläche der Wanne 230 gegenüber der Umgebung schützend abgedeckt ist.

Anstelle eines Klebstoffes aus Gießharz kann auch ein anderer Ein- oder Zweikomponenten-Kleber oder ein Schmelzkleber verwendet werden. Da der jeweilige Streckmetallmantel äußerst glatte Innen- und Außenflächen aufweist, können auch sehr empfindliche, aber in der Filtrierleistung optimierte Filtermatten zum Einsatz kommen.

In den beschriebenen Ausführungsbeispielen umgibt der Streckmetallmantel die aufgefaltete Filtermatte längs eines zylindrischen Umfanges. Hierbei schützt der Streckmetallmantel zumindest nach einer Seite, also nach außen zur Umgebung hin oder nach innen zum Filterinneren hin, die Filtermatte. So Kann es für besondere Filtrieranwendungen vorgesehen sein, daß sich die Anströmrichtung umkehrt, mithin also die zu filtrierende Fluidmenge vom Inneren des Filterelementes nach außen zur Umgebung hin dieses durchströmt (nicht dargestellt). Bei hohen Beanspruchungen umgreift dann das angesprochene Stützrohr das Filterelement von außen her und der Streckmetallmantel würde zum Inneren des Filterelementes hin die Filtermatte schützend umgeben. Bei einer dahingehenden Ausgestaltung liegt es noch im erfindungsgemäßen Bereich, wenn zwischen dem außen liegenden Stützrohr und der Filtermatte dazwischenliegend ein weiterer Streckmetallmantel (nicht dargestellt) angeordnet ist.

Bei der Ausführungsform gemäß der Fig.3 sind die Enden der Filtermatte 220 zwischen den Enden 218 des Streckmetallmantels und den Flanken des Längsnahtclips 230 geführt. Diese Ausgestaltung hat sich auch insofern als vorteilhaft erwiesen, daß ein Ausreißen der Filtermatte an der Stelle der Umlenkung mit Sicherheit vermieden ist.

## Patentansprüche

1. Rohrförmiges Filterelement zur Filtration von Fluiden mit einer zick-zack-förmig gefalteten Filtermatte (10,110,210), deren beide einander zugewandten und abgebogenen Enden (12,112,212) durch ein Klebstoffbett (24,124,224) verbunden und in ihrer Lage fixiert sind, wobei die Filtermatte (10,110,210) zumindest auf der äußeren Seite von einem zylindrischen Streckmetallgitter umgeben ist, dadurch gekennzeichnet, daß das Streckmetallgitter einen Streckmetallmantel (14,114,214) bildet, der mit geringer Maschenweite oder engporig jeweils in einer Durchlaßgröße zwischen 0,5 mm bis 2,5 mm die Filtermatte (10,110,210) schützend umgibt, und daß in dem Klebstoffbett (24,124, 224) die einander zugewandten und abgekanteten Enden (18,118,218) des Streckmetallmantels (14,114,214) eingebettet sind, die die Enden (12,212) der Filtermatte zwischen sich aufnehmen und/oder parallel zu diesen (112,212) verlaufend angeordnet sind.

2. Filterelement nach Anspruch 1, dadurch gekennzeichnet, daß der Streckmetallmantel (14,114,214) aus nicht rostendem Stahl oder aus verzinktem Stahl gebildet ist und daß der Streckmetallmantel (14,114,214) rautenförmige Durchlässe aufweist, deren freie Diagonalen D die Größe zwischen 0,5 mm bis 1,75 mm aufweisen, die die Maschenweite oder die Porengröße mit bestimmen.

3. Filterelement nach Anspruch 1 oder 2, dadurch gekennzeichnet, daß die Filtermatte (10,110,210) mehrschichtig aufgebaut ist und daß als Schichten mindestens ein Polyestervlies und/oder eine Glasfasermatte und/oder ein Papiervlies und/oder ein Edelstahl-Polyester-Mischgewebe oder ein Metalldrahtgewebe oder ein Kunststoffgewebe verwendet sind.

4. Filterelement nach einem der Ansprüche 1 bis 3, dadurch gekennzeichnet, daß die abgekanteten Enden (12,112,212) des Streckmetallmantels (14,114,214) in einem spitzen Winkel aufeinander zulaufen und daß eine weitere Begrenzung des Klebstoffbettes (24,124,224) durch die in einem spitzen Winkel aufeinander zulaufenden Enden (12,112,212) der Filtermatte (10,110,210) gegeben ist.

5. Filterelement nach einem der Ansprüche 1 bis 4, dadurch gekennzeichnet, daß als weitere Begrenzung des Klebstoffbettes (124,224) eine wannenartige Klammer (130,230) vorgesehen ist, in die die Enden (112,212) von Filtermatte (110,210) und Streckmetallmantel (114,214) eingreifen.

6. Filterelement nach einem der Ansprüche 1 bis 5, dadurch gekennzeichnet, daß die mittels des Klebstoffbettes (24, 124) hergestellte Verbindung eine Art Längsnaht ausbildet, die zur Umgebung hin von einem Steg (26,126) abgedeckt ist, der mit einer Stegfläche (28,128) in die Längsnaht eingreift.

7. Filterelement nach einem der Ansprüche 1 bis 6, dadurch gekennzeichnet, daß der Klebstoff (22,122,222) für das Klebstoffbett (24,124,224) aus einem Gießharz oder einem anderen Ein- oder Zweikomponenten-Kleber oder einem Schmelzkleber gebildet ist.

8. Filterelement nach einem der Ansprüche 1 bis 7, dadurch gekennzeichnet, daß ein zweiter Streckmetallmantel auf der Innenseite des Filterelementes angeordnet ist, der die Filtermatte (10,110,210) nach innen abstützt.

## Claims

1. Tubular filter element for the filtration of fluids with a filter mat (10, 110, 210) folded in zig-zag shape, whereof the two ends (12, 112, 212) which face each other and are bent over are connected by an adhesive bed (24, 124, 224) and fixed in their position, the filter mat (10, 110, 210) at least on the outer side being surrounded by a cylindrical expanded metal lattice, characterised in that the expanded metal lattice forms an expanded metal jacket (14, 114, 214), which with a small mesh size or with narrow pores respectively with an opening size of between 0.5 mm to 2.5 mm surrounds the filter mat (10, 110, 210) in a protecting manner and that embedded in the adhesive bed (24, 124, 224) are the facing and chamfered ends (18, 118, 218) of the expanded metal jacket (14, 114, 214), which receive the ends (12, 212) of the filter mat between them and/or are arranged to extend parallel to the latter (112, 212).

2. Filter element according to Claim 1, characterised in that the expanded metal jacket (14, 114, 214) is formed from stainless steel or galvanised steel and that the expanded metal jacket (14, 114, 214) comprises diamond-shaped openings, whereof the free diagonals D have a size of between 0.5 mm to 1.75 mm, which jointly determine the mesh width or the pore size.

3. Filter element according to Claim 1 or 2, characterised in that the filter mat (10, 110, 210) is constructed with multiple layers and that as the layers at least one polyester fleece and/or one glass fibre mat and/or one paper fleece and/or one high-grade steel-polyester-mixed gauze or a metal wire gauze or a synthetic gauze are used.

4. Filter element according to one of Claims 1 to 3, characterised in that the bent ends (12, 112, 212) of the expanded metal jacket (14, 114, 214) run towards each other at an acute angle and that a further boundary of the adhesive bed (24, 124, 224) is defined by the ends (12, 112, 212) of the filter mat (10, 110, 210) running towards each other at an acute angle.

5. Filter element according to one of Claims 1 to 4, characterised in that provided as a further boundary of the adhesive bed (12, 224) is a trough-like clip (130, 230), in which the ends (112, 212) of the filter mat (110, 210) and expanded metal jacket (114, 214) engage.

6. Filter element according to one of Claims 1 to 5, characterised in that the connection produced by means of the adhesive bed (24, 124) forms a type of longitudinal seam, which towards the atmosphere is covered by a web (26, 126), which engages by a web surface (28, 128) in the longitudinal seam.

7. Filter element according to one of Claims 1 to 6, characterised in that the adhesive (22, 122, 222) for the adhesive bed (24, 124, 224) is formed from a casting resin or another single- or two-component adhesive or a hot-melt adhesive.

8. Filter element according to one of Claims 1 to 7, characterised in that a second expanded metal jacket is located on the inside of the filter element, which supports the filter mat (10, 110, 210) on the inside.

## Revendications

1. Elément filtrant tubulaire destiné à filtrer des fluides, comprenant une natte filtrante (10, 110, 210) pliée en forme de zigzag, dont les deux extrémités (12, 112, 212) face à face et repliées sont assemblées et fixées dans leur position par un lit de colle (24, 124, 224), la natte filtrante (10, 110, 210) étant enveloppée au moins sur sa face extérieure par un treillis cylindrique en métal déployé, caractérisé en ce que le treillis en métal déployé est formé par une enveloppe en métal déployé (14, 114, 214) avec des mailles de faible largeur ou des pores étroits présentant un orifice compris entre 0,5 mm et 2,5 mm, qui entoure la natte filtrante (10, 110, 210) et en ce que les extrémités face à face coudées (18, 118, 218) de l'enveloppe en métal déployé (14, 114, 214) sont enrobées dans le lit de colle (24, 124, 224) et reçoivent entre elles les extrémités (12, 212) de la natte filtrante et/ou sont disposées parallèlement à ces dernières (112, 212).

2. Elément filtrant selon la revendication 1, caractérisé en ce que l'enveloppe en métal déployé (14, 114, 214) est réalisée dans un acier inoxydable ou un acier galvanisé, et en ce que l'enveloppe en métal déployé (14, 114, 214) est munie d'orifices en forme de losanges, dont les diagonales libres D mesurent entre 0,5 et 1,75 mm, lesquelles déterminent la largeur des mailles ou la taille des pores.

3. Elément filtrant selon la revendication 1 ou 2, caractérisé en ce que la natte filtrante (10, 110, 210) est constituée, de plusieurs couches, et en ce que les couches utilisées sont au moins un non-tissé en polyester et/ou une natte en fibres de verre et/ou un non-tissé en papier et/ou un tissu combiné acier fin et spécial et polyester ou un treillis métallique ou un tissu en matière synthétique.

4. Elément filtrant selon l'une quelconque des revendications 1 à 3, caractérisé en ce que les extrémités coudées (12, 112, 212) de l'enveloppe en métal déployé (14, 114, 214) se rejoignent en formant un angle aigu, et en ce que le lit de colle (24, 124, 224) est également délimité par les extrémités (12, 112, 212) de la natte filtrante (10, 110, 210) qui se rejoignent en formant un angle aigu.

5. Elément filtrant selon l'une quelconque des revendications 1 à 4, caractérisé en ce qu'il est prévu de poser un crampon (130, 230) en forme de cuvette délimitant également le lit de colle (124, 224), dans lequel crampon s'engagent les extrémités (112, 212) de la natte filtrante (110, 210) et de l'enveloppe en métal déployé (114, 214).

6. Elément filtrant selon l'une quelconque des revendications 1 à 5, caractérisé en ce que l'assemblage formé par le lit de colle (24, 124) constitue une sorte de jointure longitudinale, qui est recouverte sur le côté orienté vers l'environnement par une languette (26, 126), dont une branche (28, 128) pénètre dans la jointure longitudinale.

7. Elément filtrant selon l'une quelconque des revendications 1 à 6, caractérisé en ce que la colle (22, 122, 222) utilisée pour le lit de colle (24, 124, 224) est une résine de coulée ou une autre colle comprenant un ou deux composants ou une colle à fusion.

8. Elément filtrant selon l'une quelconque des revendications 1 à 7, caractérisé en ce qu'une deuxième enveloppe en métal déployé est posée sur la face intérieure de l'élément filtrant et constitue un appui intérieur pour la natte filtrante (10, 110, 210).
